# DEMANDE DE BREVET EUROPEEN

(11) **EP 1 313 320 A1**
(43) Date de publication de la demande: **21.05.2003**
(21) Numéro de dépôt: 02079624.9
(22) Date de dépôt: 06.11.2002
(51) Int. Cl.: H04N 7/18

(54) **Système pour transmettre des flux vidéo relatifs à un évènement à des spectateurs assistant physiquement audit évènement**

(30) Priorité: 13.11.2001 FR 0114666
(71) Demandeur: Koninklijke Philips Electronics N.V., 5621 BA Eindhoven (NL)
(72) Inventeur: Bazzaz, Paul, 75008 Paris (FR)
(74) Mandataire: de la Fouchardière, Marie-Noelle

(57) **Abrégé**

Un système de transmission selon l'invention comporte un point d'accès sans fil (7) ayant une zone de couverture couvrant au moins une partie du lieu (1) dans lequel se déroule l'événement, destiné à recevoir des flux vidéo relatifs audit événement et à les retransmettre à des spectateurs (S1, S2, S3) qui assistent physiquement audit événement et qui sont équipés d'un dispositif de visualisation portable.

L'invention permet de cumuler les avantages qui classiquement bénéficient séparément d'une part aux spectateurs qui sont sur place (ambiance...) et d'autre part aux téléspectateurs (accès à des informations complémentaires, confort de visualisation...).

## Description

### Domaine de l'invention

L'invention concerne un système de transmission comportant des caméras pour acquérir des images relatives à un événement qui se déroule dans un certain lieu, au moins un centre de traitement pour produire des flux vidéo à partir desdites images, et des moyens de transmission d'un ou plusieurs desdits flux vidéo.

L'invention concerne aussi un point d'accès sans fil destiné à être utilisé dans un tel système de transmission.

Elle concerne aussi une procédé de distribution de flux vidéo relatifs à un événement se déroulant dans un certain lieu, comportant une étape d'acquisition d'images avec des caméras placées sur ledit lieu, une étape de production de flux vidéo à partir desdites images, et une étape de transmission d'un ou plusieurs desdits flux vidéo.

L'invention s'applique notamment dans le domaine des services de loisir, d'éducation et de spectacle.

### Arrière plan technologique de l'invention

La demande internationale de brevet WO 98/41020 publiée le 17 septembre 1998 décrit un système de transmission interactif par câble, satellite, liaison filaire ou diffusion hertzienne, permettant à des téléspectateurs qui n'assistent pas physiquement à un événement (par exemple un événement sportif) de recevoir plusieurs flux vidéo correspondant à différentes prises de vue de l'événement, ainsi que des services spécifiques tels que des ralentis, des revisualisations d'actions, des statistiques, des interviews, à partir d'un téléviseur ou d'un ordinateur personnel équipé d'une carte télévision. Chaque téléspectateur peut choisir à tout instant le flux vidéo qu'il souhaite visualiser parmi une certaine variété de flux vidéo disponibles. Les possibilités ainsi offertes aux téléspectateurs sont très attractives. L'invention a notamment pour but de proposer un système de transmission qui permette d'offrir ce genre de possibilités à d'autre types d'utilisateurs.

### Résumé de l'invention

Un système de transmission selon l'invention et tel que décrit dans le paragraphe introductif est caractérisé en ce qu'il comporte au moins un point d'accès sans fil ayant une zone de couverture couvrant au moins une partie dudit lieu, destiné à recevoir au moins un desdits flux vidéo et à le retransmettre par voie radio de sorte qu'il puisse être reçu par un ou plusieurs spectateurs équipés d'un dispositif de visualisation portable situé dans ladite zone de couverture.

De même, un procédé selon l'invention de distribution de flux vidéo relatifs à un événement se déroulant dans un certain lieu est caractérisé en ce qu'il comporte une étape de transmission d'au moins un desdits flux vidéo vers un point d'accès sans fil ayant une zone de couverture couvrant au moins une partie dudit lieu, et une étape de retransmission dudit flux vidéo par voie radio à partir dudit point d'accès sans fil de sorte qu'il puisse être reçu par un ou plusieurs spectateurs équipés d'un dispositif de visualisation portable situé dans ladite zone de couverture.

Ainsi, l'invention permet à un spectateur qui assiste physiquement à l'événement d'accéder aux mêmes services que ceux auxquels accèdent les téléspectateurs restés chez eux. Grâce à l'invention , il est possible de cumuler des avantages qui classiquement bénéficient séparément d'une part aux spectateurs qui sont sur place, et d'autre part aux téléspectateurs qui restent chez eux. L'invention permet par exemple aux personnes passionnées par un sport d'être baignées dans l'ambiance d'un match tout en disposant d'informations additionnelles telles que des scores, des statistiques, des ralentis, des re-visualisation des actions importantes, des interviews de joueurs...

L'invention permet aussi à un spectateur, qui n'est pas bien placé dans le stade pour suivre une action, de suivre cette même action à partir de son dispositif portable.

L'invention permet aussi à un spectateur qui a choisi d'assister physiquement à un certain match, de visualiser des flux vidéo relatifs à d'autres matchs qui se déroulent simultanément, par exemple pendant les arrêts de jeu, afin de se tenir informé sur l'évolution de ces autres matchs.

Par ailleurs, l'utilisation d'un dispositif personnel et portable permet d'obtenir un grand confort d'utilisation. Ce type de dispositif de visualisation offre en effet une bonne qualité d'affichage et l'utilisateur est libre de le positionner à sa convenance pour optimiser son confort d'utilisation.

Dans un mode de réalisation avantageux de l'invention, ledit dispositif de visualisation portable comporte une interface homme machine pour sélectionner le flux vidéo à visualiser parmi plusieurs flux vidéo diffusés par ledit point d'accès sans fil. On parle alors de service de type « broadcast », ou de service de type « multicast » lorsque les flux diffusés sont accessibles à un groupe de plusieurs utilisateurs.

Dans un autre mode de réalisation avantageux de l'invention, le système transmission comporte une base de données dans laquelle sont pré-enregistrés un ou plusieurs flux vidéo, et ledit dispositif de visualisation portable comporte une interface homme machine pour sélectionner un flux vidéo pré-enregistré dans ladite base de données afin de le visualiser. On parle alors de service de type « unicast ».

Ces deux modes de réalisation permettent de personnaliser le service offert aux spectateurs puisque chaque spectateur peut ainsi choisir à tout instant le flux auquel il souhaite accéder.

Lorsque le spectateur a accès à des flux vidéo pré-enregistrés (service dit « unicast »), l'interface homme-machine est avantageusement prévue pour permettre au spectateur de naviguer dans le flux vidéo pré-enregistré qu'il a sélectionné, par exemple de faire des pauses, des marches avant, des marches arrière, des arrêts...

Avantageusement un procédé de distribution selon l'invention comporte une étape de facturation. La facturation dépend par exemple du service « unicast » ou « broadcast » auquel accède le spectateur, le service de type « unicast » étant en principe plus cher que le service de type « broadcast ».

Par exemple, l'étape de facturation implique une transaction électronique entre un serveur de transaction et ledit dispositif de visualisation portable.

Dans un mode de réalisation avantageux, le procédé de distribution selon l'invention comporte une étape de location pour proposer ledit dispositif de visualisation portable en location aux spectateurs assistant audit événement. Le prix de la location comprend par exemple le prix d'accès au service dit « broadcast » et/ou au service dit « unicast » au choix du spectateur.

Avantageusement, le procédé de distribution selon l'invention laisse au spectateur la possibilité d'utiliser un dispositif de visualisation portable personnel.

L'invention n'est pas limitée aux événements sportifs. Elle est applicable à tout type d'évènements, notamment à des spectacles, des manifestations éducatives, politiques, professionnelles...

### Brève description des figures

D'autres détails et avantages de l'invention apparaîtront dans la description qui va suivre, faite en regard des figures annexées données à titre d'exemples non limitatifs:
- la figure 1 représente un exemple de système de transmission selon l'invention, pour la mise en oeuvre d'un service de type « broadcast »,
- la figure 2 représente un exemple de système de transmission selon l'invention, pour la mise en oeuvre d'un service de type « unicast ».

### Description d'un mode de réalisation préférentiel de l'invention

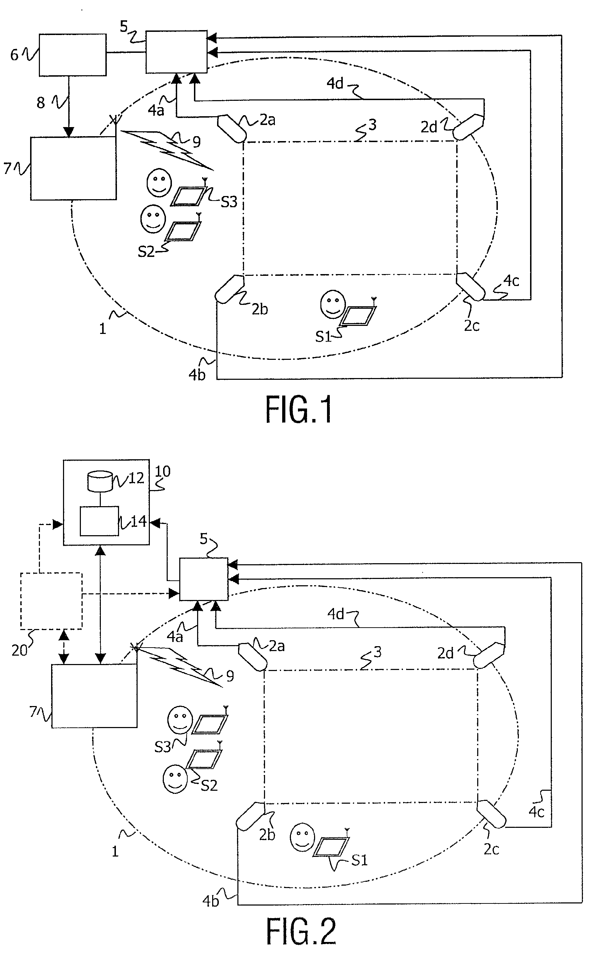

Sur la figure 1, on a représenté un lieu 1 dans lequel se déroule un événement. Des caméras 2a à 2d sont placées de façon à capturer des images relatives audit événement avec différents angles de prises de vues. Sur la figure 1, les caméras 2a à 2d sont placées à chacun des quatre angles d'un rectangle 3 symbolisant un terrain de sport. Les images capturées par les quatre caméras 2a à 2d sont transmises à un centre de traitement 5 via des liaisons 4a à 4d. Le centre de traitement 5 effectue un encodage vidéo des images capturées et produit des flux vidéo comprimés, par exemple des flux vidéo au format MPEG-2. Pour des images au format CCIR à 25 images par seconde, le débit de la transmission entre chaque caméra 2a à 2d et l'encodeur vidéo 5 est de l'ordre de 150 Mbps.

Les liaisons 4a à 4d sont par exemple constituées par des câbles haut débit. Les flux vidéo produits par le centre de traitement 5 sont transmis par un module de transmission 6 à un point d'accès sans fil 7 via une liaison 8.

La compression réalisée par le centre de traitement 5 permet de réduire le débit nécessaire à la transmission des flux vidéo vers le point d'accès sans fil 7.

Actuellement, les points d'accès sans fils disponibles sur le marché sont dotés d'une entrée Ethernet et d'une sortie sans fil. Lorsque le centre de traitement 5 et le point d'accès sans fil 7 sont installés à proximité l'un de l'autre (par exemple dans le lieu 1), la liaison 8 est donc avantageusement une liaison Ethernet. Typiquement une liaison Ethernet permet de connecter deux équipements éloignés d'une distance de l'ordre de 200 à 300m, avec un débit de l'ordre de 100Mbps. Lorsque le centre de traitement 5 et le point d'accès sans fil 7 sont plus éloignés (c'est-à-dire lorsque le centre de traitement n'est pas installé sur le lieu 1), on utilise par exemple une liaison optique ou une liaison de type ISDN, avec un convertisseur vers Ethernet en entrée du point d'accès sans fils.

Le point d'accès sans fil 7 diffuse par voie radio 9 les flux vidéo qu'il reçoit en provenance du module de transmission 6. Par exemple la liaison radio 9 est une liaison IEEE 802.11 offrant un débit maximum de 11Mbps. Tout autre moyen de transmission local sans fil à haut débit est utilisable (par exemple, on peut envisager d'utiliser des évolutions futures de la famille de normes de transmission sans fil 802, ou la norme HiperlanII).

Les flux vidéo sont transportés en utilisant des protocoles de transport classiques, par exemple les protocoles RTP sur UDP sur IP.

Dans certains modes de réalisation, en particulier lorsque la dimension du service à rendre le nécessite, c'est-à-dire lorsque le nombre de zones à desservir et/ou le nombre de flux vidéo à transmettre pour chaque zone sont importants, le système de transmission selon l'invention comporte plusieurs points d'accès sans fil 7. Dans ce cas, le module de transmission 6 comporte un ou plusieurs équipements de transmission du type répéteur / pont / échangeur / routeur pour transporter les flux du centre de traitement 5 vers les points d'accès sans fil 7. Les interfaces entre ces équipements de transmission sont par exemple des interfaces compatibles Ethernet, supportant un débit pouvant varier de 10 Mbps au minimum jusqu'à plus de 1 Gbps. Les liaisons entre ces équipements de transmission sont par exemple optiques ou métalliques.

Sur la figure 1, trois spectateurs sont dotés chacun d'un dispositif portable de visualisation, référencés S1, S2 et S3 respectivement, destinés à recevoir des flux vidéo diffusés par le point d'accès sans fil 7. Dans la pratique, ces dispositifs de visualisation comportent une interface homme machine, par exemple une interface graphique, permettant d'annoncer à chaque spectateur les flux vidéo disponibles de sorte que l'utilisateur puisse sélectionner à tout instant le flux vidéo qu'il souhaite visualiser. L'interface graphique comporte par exemple une icône pour chaque flux vidéo disponible. Le spectateur peut sélectionner l'icône qui correspond au flux vidéo qui l'intéresse avec un outil de sélection, par exemple un stylet si le dispositif de visualisation est doté d'un écran tactile, ou une ou plusieurs touches de déplacement de curseur sinon.

En plus de l'annonce des flux vidéo disponibles, les dispositifs de visualisation portables reçoivent des informations, non visibles par l'utilisateur, qui décrivent les caractéristiques des flux vidéo disponibles. Ces informations comprennent notamment des identificateurs de connexion (par exemple un identificateur du canal radio et un identificateur du port de communication RTP/UDP/IP à utiliser pour ladite connexion), et des identificateurs de format du flux vidéo (par exemple des identificateurs indiquant la norme de codage, le format d'image, le débit utilisés...).

Ainsi, lorsque le spectateur sélectionne une icône, le dispositif se branche automatiquement sur le port d'accès RTP/UDP/IP sur lequel est transmis ledit flux vidéo.

Sur la figure 2, on a représenté un exemple de système de transmission selon l'invention permettant d'offrir au spectateur un service de type « unicast ». D'après la figure 2, le centre de traitement 5 est connecté à un serveur 10 contenant une base de données 12 et un module de transmission 14 qui est lui-même connecté au point d'accès sans fil 7. Des flux vidéo qui ont été préalablement encodés sont stockés dans la base de données 12. De la même manière que précédemment, le module de transmission 14 peut inclure un ou plusieurs équipements de transmission du type répéteur / pont / échangeur / routeur, pour transmettre les flux vidéo de la base de données 12 vers plusieurs points d'accès sans fil 7.

Dans la pratique, les flux pré-enregistrés au niveau du serveur sont représentés sous forme d'icônes sur l'écran du dispositif de visualisation portable du spectateur, de sorte que celui-ci puisse sélectionner à tout instant le flux pré-enregistré qui l'intéresse. Lorsque le spectateur sélectionne un flux, une requête est émise du dispositif de visualisation portable vers le serveur 10. Le serveur 10 répond à cette requête en indiquant les caractéristiques techniques à utiliser pour recevoir le flux (portion radio fréquence et éventuellement portion temporelle dédiées au spectateur, port d'accès RTP/UDP/IP correspondant au flux pré-enregistré sélectionné). Pour ce faire, on peut utiliser un protocole propriétaire ou des protocoles connus tels que SAP (de l'anglais Session Announcement Protocol) ou SDP (de l'anglais Session Description Protocol). Le protocole SAP est défini dans la RFC 2974 de l'IETF publiée en octobre 2000. Le protocole SDP est défini dans un «draft» de l'IETF en date du 13 juillet 2001.

Avantageusement, le protocole RTSP (de l'anglais Real Time Streaming Protocol) défini dans la RFC 2326 d'avril 1998 est utilisé pour permettre au spectateur de naviguer dans le flux pré-enregistré qu'il a sélectionné, par exemple de faire des pauses, des arrêts, des avances, des retours en arrière...). Les commandes de navigation passées par le spectateur sont envoyées au serveur 10 et exécutées par le serveur 10.

Dans un mode de réalisation avantageux, on combine les moyens décrits en regard des figures 1 et 2 pour offrir au spectateur les services dits « broadcast » et les services dits « unicast ».

De façon optionnelle, lorsque le format des images capturées par les caméras ne correspond pas au format classique d'affichage sur les dispositifs de visualisation portables, il faut prévoir un pré-traitement vidéo avant l'encodage décrit ci-dessus pour convertir le format des images acquises audit format classique d'affichage sur l'écran dudit dispositif portable.

Avantageusement le procédé de distribution vidéo selon l'invention comporte une étape d'offre en location de dispositifs portables, par exemple sur le lieu 1. Le prix de la location comprend avantageusement le prix d'accès au service « broadcast » et/ou « unicast ».

Dans un autre mode de réalisation, une étape de facturation électronique est mise en oeuvre entre le dispositif portable de visualisation et un serveur de transaction 20 (représenté en pointillés sur la figure 2) pour la facturation du service « unicast ». L'accès au service n'est alors possible que lorsque le transaction est réussie.

## Revendications

1. Système de transmission comportant des caméras (2a, 2b, 2c) pour acquérir des images relatives à un événement qui se déroule dans un certain lieu (1), au moins un centre de traitement (5) pour produire des flux vidéo à partir desdites images, et des moyens de transmission (6) d'un ou plusieurs desdits flux vidéo, **caractérisé en ce qu'**il comporte au moins un point d'accès sans fil (7) ayant une zone de couverture couvrant au moins une partie dudit lieu, destiné à recevoir au moins un desdits flux vidéo et à le retransmettre par voie radio (9) de sorte qu'il puisse être reçu par un ou plusieurs spectateurs (S1, S2, S3) équipés d'un dispositif de visualisation portable situé dans ladite zone de couverture.

2. Système de transmission selon la revendication 1, **caractérisé en ce que** ledit dispositif de visualisation portable comporte une interface homme machine pour sélectionner le flux vidéo à visualiser parmi plusieurs flux vidéo diffusés par ledit point d'accès sans fil.

3. Système de transmission selon la revendication 1, **caractérisé en ce qu'**il comporte une base de données (12) dans laquelle sont pré-enregistrés un ou plusieurs flux vidéo, et **en ce que** ledit dispositif de visualisation portable comporte une interface homme machine pour sélectionner un flux vidéo pré-enregistré dans ladite base de données afin de le visualiser.

4. Système de transmission selon la revendication 3, **caractérisé en ce que** ladite interface homme machine permet de naviguer dans le flux vidéo pré-enregistré qui a été sélectionné.

5. Point d'accès sans fil (7) **caractérisé en ce qu'**il a une zone de couverture couvrant au moins une partie d'un lieu (1) dans lequel un ou plusieurs événements sont destinés à se dérouler, et **en ce qu'**il est destiné à recevoir un ou plusieurs flux vidéo produits à partir d'images relatives à un événement se déroulant dans ledit lieu et capturées par une ou plusieurs caméra (2a, 2b, 2c) placées dans ledit lieu (1), pour retransmettre le ou lesdits flux vidéo par voie radio (9) à un ou plusieurs spectateurs (S1, S2, S3) assistant audit événement et équipés d'un dispositif de visualisation portable.

6. Procédé de distribution de flux vidéo relatifs à un événement se déroulant dans un certain lieu (1), comportant une étape d'acquisition d'images avec des caméras (2a, 2b, 2c) placées sur ledit lieu, une étape de production de flux vidéo à partir desdites images, et une étape de transmission d'un ou plusieurs desdits flux vidéo, **caractérisé en ce qu'**il comporte une étape de transmission d'au moins un desdits flux vidéo vers un point d'accès sans fil (7) ayant une zone de couverture couvrant au moins une partie dudit lieu, et une étape de retransmission dudit flux vidéo par voie radio (9) à partir dudit point d'accès sans fil de sorte qu'il puisse être reçu par un ou plusieurs spectateurs (S1, S2, S3) équipés d'un dispositif de visualisation portable situé dans ladite zone de couverture.

7. Procédé de distribution de flux vidéo selon la revendication 6, **caractérisé en ce qu'**il comporte une étape de pré-enregistrement dans une base de données (12) d'un ou plusieurs flux vidéo relatifs audit événement, et **en ce qu'**une étape de sélection d'un flux vidéo pré-enregistré dans ladite base de données peut être mise en oeuvre par un spectateur (S1, S2, S3), à partir dudit dispositif portable, afin de visualiser le flux vidéo pré-enregistré sélectionné.

8. Procédé de distribution de flux vidéo selon l'une des revendications 6 ou 7, **caractérisé en ce qu'**il comporte une étape de facturation.

9. Procédé de distribution de flux vidéo selon la revendication 8, **caractérisé en ce que** ladite étape de facturation comporte une étape de transaction électronique entre un serveur de transaction (20) et ledit dispositif de visualisation portable (S1, S2, S3).

10. Procédé de distribution de flux vidéo selon l'une des revendications 6 ou 7, **caractérisé en ce qu'**il comporte une étape de location pour proposer ledit dispositif de visualisation portable en location aux spectateurs assistant audit événement.
